# EUROPÄISCHE PATENTSCHRIFT

(11) **EP 3 018 007 B1**
(45) Veröffentlichungstag und Bekanntmachung des Hinweises auf die Patenterteilung: **12.03.2025**
(21) Anmeldenummer: 15193350.4
(22) Anmeldetag: 06.11.2015
(51) Int. Cl.: B60Q 1/08, B60Q 1/14

(54) **VERFAHREN ZUM STEUERN EINER SCHEINWERFERANORDNUNG FÜR EIN FAHRZEUG UND SCHEINWERFERANORDNUNG**
METHOD FOR CONTROLLING A HEADLIGHT ASSEMBLY FOR A VEHICLE AND SUCH A HEADLIGHT ASSEMBLY
PROCEDE DE COMMANDE D'UN SYSTEME DE PHARE POUR UN VEHICULE AUTOMOBILE ET SYSTEME DE PHARE ET VEHICULE AUTOMOBILE

(30) Priorität: 06.11.2014 DE 102014222669
(43) Veröffentlichungstag der Anmeldung: 11.05.2016
(73) Patentinhaber: Volkswagen Aktiengesellschaft, 38440 Wolfsburg (DE)
(72) Erfinder: Miemietz, Stefan, 14612 Falkensee (DE); Weiß, Kristian, 13187 Berlin (DE); Max, Dr. Stephan, 38518 Gifhorn (DE); Dick, Eugen, 12043 Berlin (DE)

(56) Entgegenhaltungen:
- EP-A1- 2 631 122
- EP-A2- 2 103 868
- EP-A2- 2 388 163
- DE-A1- 102007 028 658
- DE-A1- 102009 032 019
- DE-A1- 102009 054 249

## Beschreibung

Die vorliegende Erfindung betrifft ein Verfahren zum Steuern einer Scheinwerferanordnung für ein Fahrzeug, wobei die Scheinwerferanordnung einen rechten Scheinwerfer und einen linken Scheinwerfer aufweist, wobei der rechte Scheinwerfer einen rechten Lichtstrahl und der linke Scheinwerfer einen linken Lichtstrahl emittiert. Mittels der Lichtstrahlen ist eine erste Gesamtlichtverteilung erzeugbar, bei der ein Mittelbereich gebildet wird und beidseitig neben diesem Mittelbereich Seitenbereiche gebildet werden. Dabei weisen die Seitenbereiche eine größere Leuchtweite auf als der Mittelbereich. Zudem betrifft die Erfindung eine Scheinwerferanordnung für ein Fahrzeug.

Die Scheinwerfer eines Fahrzeugs haben die Aufgabe, bei schlechten Sichtverhältnissen, insbesondere bei Dunkelheit, die Umgebung in Fahrtrichtung vor dem Fahrzeug, insbesondere die Fahrbahn, auszuleuchten. Zusätzlich dienen die Scheinwerfer als Erkennungsmerkmal für andere Verkehrsteilnehmer.

Scheinwerfersysteme zum Bereitstellen verschiedener Lichtfunktionen sind als solche bekannt. Die Lichtemission solcher Scheinwerfersysteme ist steuerbar, so dass die auszusendende Lichtverteilung variiert werden kann. Neben vom Fahrer manuell zu steuernden Lichtfunktionen, wie z.B. das manuelle Umschalten zwischen einem Abblendlicht und einem Fernlicht, sind auch automatisch regelbare Lichtfunktionen bekannt, bei denen in Abhängigkeit von Fahrzeuginformationen die Abstrahlcharakteristik der Scheinwerfer automatisch geregelt wird. Auf diese Weise kann die von den Scheinwerfern zu emittierende Lichtverteilung an den voraus liegenden Streckenabschnitt, die Verkehrssituation, die Lichtverhältnisse und die Wetterbedingungen angepasst werden, um die Sicht des Fahrers zu verbessern und gegebenenfalls die Blendung anderer Verkehrsteilnehmer zu reduzieren. Die Lichtverteilung wird z.B. als Kurvenlicht in Abhängigkeit vom Lenkwinkel oder einem erfassten voraus liegenden Kurvenabschnitt angepasst.

Individuen in der Umgebung in Fahrtrichtung vor einem Fahrzeug, z.B. Menschen oder Tiere am Straßenrand oder auch auf der Fahrbahn, stellen eine potentielle Unfallgefahr dar. Aus diesem Grund wurde die Erfassung solcher Individuen z.B. durch Nachtsichtsysteme vorgeschlagen, um den Fahrer frühzeitig auf solche Gefahrenpotentiale aufmerksam zu machen und gegebenenfalls die Lichtverteilung entsprechend anzupassen.

Die WO 03/106219 A1 beschreibt beispielsweise ein Verfahren zur Steuerung der Lichtverteilung eines Fahrzeugs, bei dem mittels einer Infrarot-Kamera ein potentielles Hindernis erfasst wird und die Lichtverteilung so verändert wird, dass das potentielle Hindernis partiell angeleuchtet wird.

Die DE 103 54 104 A1 beschreibt ein Verfahren zur Steuerung der Ausleuchtung eines seitlichen Fahrbahnbereiches mittels eines Hilfsscheinwerfers. Im Umfeld des Fahrzeugs werden Objekte, insbesondere Fußgänger, z.B. durch ein Nachtsichtsystem erfasst. Mittels eines Algorithmus wird eine Unfallgefahr erkannt und bei einer Kollisionswahrscheinlichkeit des Objekts mit dem Fahrzeug wird der Hilfsscheinwerfer auf das Objekt ausgerichtet.

Die DE 10 2009 051 485 A1 beschreibt ein Verfahren zur Steuerung einer mehrere Leuchtdioden umfassenden Beleuchtungseinrichtung eines Fahrzeugs. Dabei wird in der Umgebung des Fahrzeugs die relative Position, Geschwindigkeit und/oder Beschleunigung eines Objekts, z.B. eines Fußgängers, sensorisch erfasst, z.B. mittels einer Infrarot-Kamera und eines Nachtassistenzsystems. Das Objekt wird mittels einer Auswerteeinheit als Gefahrenpunkt erkannt und die Scheinwerfer werden derart gesteuert, dass die Lichtverteilung einer oder mehrerer Leuchtdioden auf den Gefahrenpunkt gerichtet wird. Um eine Blendung zu vermeiden, falls es sich bei dem Objekt um einen Fußgänger oder ein Tier handelt wird die Beleuchtung nur bis zu einer Grenze unterhalb des Kopfes beleuchtet.

Die EP 2 338 729 A1 sowie die EP 2 261 081 A1 beschreiben ebenfalls Verfahren zum Steuerung einer mehrere Leuchtdioden umfassende Beleuchtungseinrichtung eines Fahrzeugs zur Erzeugung mehrerer Lichtverteilungen, z.B. Abblendlicht und Fernlicht. Dabei kann ein Markierungslicht zum Markieren von z.B. Fußgängern bereitgestellt werden, welche mittels Nachtsichtgeräten erfasst werden können.

Schließlich beschreibt die WO 2014/001022 ein Verfahren zum Betreiben eines Scheinwerfersystems, welches schwenkbare Scheinwerfer umfasst. Es wird die Position und die Bewegung eines Individuums erfasst und die Lichtemission zumindest eines Scheinwerfers wird in Abhängigkeit von der Position und/oder der Bewegung des Individuums geschwenkt. Andere Verfahren sind aus den DE 10 2009 032019 A1 oder DE 10 2007 028658 A1 bekannt.

Es ist die Aufgabe der vorliegenden Erfindung, ein Verfahren und eine Scheinwerferanordnung bereitzustellen, mittels welchen eine verbesserte Wahrnehmung von Objekten in der Umgebung des Fahrzeugs erlangt werden kann, wobei dies kostengünstig und bauraumsparend realisiert wird.

Diese Aufgabe wird erfindungsgemäß durch ein Verfahren mit den Merkmalen des Anspruchs 1 und einer Scheinwerferanordnung mit den Merkmalen des Anspruchs 10 gelöst. Vorteilhafte Aus- und Weiterbildungen ergeben sich aus den abhängigen Ansprüchen.

Bei dem erfindungsgemäßen Verfahren wird mittels des linken und des rechten Lichtstrahls eine Ausgangslichtverteilung erzeugt. Zudem wird zumindest ein Objekt in Fahrtrichtung vor dem Fahrzeug erfasst, wobei die Position des Objekts ermittelt wird. Wenn die Position des Objekts ermittelt worden ist, wird ein zweite Gesamtlichtverteilung erzeugt, bei der die Seitenbereiche der ersten Gesamtlichtverteilung zumindest teilweise bei der Position des Objekts überlagert werden, so dass ein überlagerter Bereich gebildet wird, in dem sich die Lichtintensität aus der Lichtintensität des linken und des rechten Lichtstrahls zusammensetzt.

Die erste Gesamtlichtverteilung muss erfindungsgemäß bei dem Verfahren nicht erzeugt werden. Die erste Gesamtlichtverteilung kann jedoch die Ausgangslichtverteilung sein. Bei der ersten Gesamtlichtverteilung handelt es sich insbesondere um ein maskiertes Dauerfernlicht, bei welchem ein vorausfahrender und/oder entgegenkommender Verkehrsteilnehmer aus der Lichtverteilung herausgeschnitten wird. Ein solches maskiertes Dauerfernlicht ist beispielsweise in der DE 10 2009 054 249 A1 beschrieben, deren diesbezüglicher Inhalt durch Bezugnahme in die vorliegende Anmeldung aufgenommen wird. Zur Erzeugung der zweiten Gesamtlichtverteilung werden die verschiedenen Teilbereiche der ersten Gesamtlichtverteilung verwendet, so dass die zweite Gesamtlichtverteilung Fernlichtanteile aufweist. Vorteilhafterweise müssen zur Erzeugung der zweiten Gesamtlichtverteilung keine separaten Bauteile, insbesondere keine separaten Lichtmodule, in dem Scheinwerfer verbaut werden. Die zweite Gesamtlichtverteilung kann hierdurch vorteilhafterweise auf kostengünstige und bausparende Art und Weise erzeugt werden.

Durch die Überlagerung der Seitenbereiche wird in der zweiten Gesamtlichtverteilung ein Lichtspot bereitgestellt, der auf das erfasste Objekt gerichtet wird. Dadurch wird das erfasste Objekt markiert. Bei der zweiten Gesamtlichtverteilung handelt es sich also insbesondere um ein Markierungslicht.

Bei dem Objekt kann es sich um ein statisches Objekt oder ein dynamisches Objekt handeln.

Insbesondere handelt es sich bei dem Objekt nicht um ein entgegenkommendes oder vorausfahrendes Kraftfahrzeug. Ein statisches Objekt kann beispielsweise ein Hindernis auf der Fahrbahn, beispielsweise eine Baustellenbegrenzung, sein. Ein dynamisches Objekt kann ein Fußgänger, der sich auf dem Gehsteig befindet oder der die Fahrbahn überqueren möchte bzw. gerade überquert, sein. Das Objekt kann auch ein unbeleuchteter Fahrradfahrer sein, der auf einem Radweg neben der Fahrbahn oder am Fahrbahnrand fährt. Es wird insbesondere die Position des Objekts relativ zum Fahrzeug ermittelt, und zwar bevorzugt fortwährend.

In einer Ausgestaltung des erfindungsgemäßen Verfahrens umfassen der linke und der rechte Lichtstrahl zum Erzeugen der ersten und zweiten Gesamtlichtverteilung eine im Wesentlichen vertikale Hell-Dunkel-Grenze und eine im Wesentlichen horizontale Hell-Dunkel-Grenze, so dass die Hell-Dunkel-Grenzen der Lichtstrahlen jeweils eine L-Form aufweisen. Dabei werden der linke und der rechte Lichtstrahl derart überlagert, dass die vertikale Hell-Dunkel-Grenze des linken Lichtstrahls rechts von der vertikalen Hell-Dunkel-Grenze des rechten Lichtstrahls liegt. Die in Bezug auf die Hell-Dunkel-Grenze verwendeten Begriffe horizontal und vertikal beziehen sich auf die Lichtverteilung auf einem senkrecht zur Lichtemissionsrichtung angeordneten Messschirm. Eine horizontale Hell-Dunkel-Grenze verläuft in diesem Fall parallel zu der Horizontalachse. Eine vertikale Hell-Dunkel-Grenze verläuft senkrecht zu der Horizontalachse. Bei der ersten Gesamtlichtverteilung entsteht ein Korridor, in dem sich der erfasste Verkehrsteilnehmer befindet. Die erste Gesamtlichtverteilung weist insbesondere insgesamt vier vertikale Hell-Dunkel-Grenzen, zwei pro Lichtstrahl, auf. Dabei weist jeder Lichtstrahl eine äußere und eine innere Hell-Dunkel-Grenze auf. Die innere Hell-Dunkel-Grenze befindet sich dabei direkt neben dem erfassten Verkehrsteilnehmer, während sich die äußere Hell-Dunkel-Grenze nicht direkt neben dem erfassten Verkehrsteilnehmer befindet. Der Korridor, in dem sich der erfasste Verkehrsteilnehmer befindet, wird also von den inneren vertikalen Hell-Dunkel-Grenzen und der horizontalen Hell-Dunkel-Grenze gebildet. Die L-Form für die Hell-Dunkel-Grenze jedes Lichtstrahls wird ebenso von der inneren vertikalen Hell-Dunkel-Grenze und der horizontalen Hell-Dunkel-Grenze gebildet.

Durch diese Ausgestaltung wird auf einfache Art und Weise ein lichtintensiver Bereich erzeugt, welcher zu beiden Seiten in der Lichtintensität neben dem erfassten Objekt abfällt. Der lichtintensive Bereich wird dabei durch Überlagerung zweier Fernlichtanteile erzeugt. Definitionsgemäß weist jeder der Seitenbereiche eine Lichtintensität von 50% der zu erreichenden Lichtintensität der zweiten Gesamtlichtverteilung auf. Der überlagerte Bereich der zweiten Gesamtlichtverteilung hat dann eine Lichtintensität von 100%. In den Bereichen direkt neben dem überlagerten Bereich weist die zweite Gesamtlichtverteilung wiederum eine Lichtintensität von 50% auf. In der zweiten Gesamtlichtverteilung sind also keine inneren und äußeren Hell-Dunkel-Grenzen der beiden Lichtstrahlen mehr erkennbar. Vielmehr werden Grenzen erzeugt, welche den Bereich mit 100% Lichtintensität beidseitig von den Bereichen mit 50% Lichtintensität abgrenzen. Die Lichtintensität kann mit zunehmendem Abstand zum überlagerten Bereich weiter abfallen, so dass eine weiche Grenze zwischen der zweiten Gesamtlichtverteilung und den nicht beleuchteten Fahrbahnbereichen gebildet wird. Da die L-Formen Teil des maskierten Dauerfernlichts sind, ist auch die Leuchtweite bei Erzeugung der L-Formen entsprechend der Leuchtweite des maskierten Dauerfernlichts eingestellt. Bei Erzeugung der L-Formen wird also zunächst aufgeblendet.

Die L-Form der Hell-Dunkel-Grenzen kann dabei insbesondere über eine in den Scheinwerfern angeordnete Blendenwalze erzeugt werden. Eine solche Blendenwalze ist beispielsweise in der Druckschrift DE 10 2012 022 524 A1 oder der EP 0 935 728 B1 beschrieben, deren diesbezüglicher Inhalt durch Bezugnahme in die vorliegende Anmeldung aufgenommen wird. Eine solche Blendenwalze weist mehrere auf dem Umfang der Blende angeordnete Blendenkanten auf. Durch Drehung der Blendenwalze kann eine Blendenkante, welche die L-förmige Hell-Dunkel-Grenze erzeugt, in den Strahlengang eingebracht werden. Dabei kann je nach Walzenstellung ebenso die Leuchtweite der Lichtstrahlen reguliert werden.

Zudem können die Scheinwerfer derart ausgestaltet sein, dass die Lichtemissionsrichtung der Scheinwerfer schwenkbar ist. Dazu können insbesondere die Scheinwerfer selbst schwenkbar gelagert sein. Sie sind dann insbesondere um eine horizontale und/oder vertikale Achse verschwenkbar. Durch eine Verschwenkung der Scheinwerfer um die vertikale Achse wird insbesondere die Gesamtlichtverteilung nach rechts oder links verschwenkt. Durch eine Verschwenkung um die horizontale Achse kann ebenso eine Leuchtweite reguliert werden.

Insbesondere werden zunächst die Lichtemissionsrichtungen der Scheinwerfer derart verschwenkt, dass der überlagerte Bereich auf die Position des Objekts gerichtet wird. Dann werden die L-förmigen Hell-Dunkel-Grenzen der Lichtstrahlen erzeugt. Beim Schwenken des überlagerten Bereichs ist daher noch nicht aufgeblendet. Dies minimiert die Gefahr, andere Verkehrsteilnehmer zu blenden. Es wird erst dann aufgeblendet, wenn der überlagerte Bereich auf die Position des Objekts ausgerichtet ist.

In einer anderen Ausgestaltung werden erst die L-förmigen Hell-Dunkel-Grenzen der Lichtstrahlen erzeugt und dann werden die Lichtemissionsrichtungen der Scheinwerfer derart verschwenkt, dass der überlagerte Bereich auf die Position des Objekts gerichtet wird. Dies bedeutet, dass zunächst aufgeblendet wird, also eine Fernlichtverteilung mit einem überlagerten Bereich erzeugt wird. Dies erhöht die Warnwirkung des Markierungslichts. Dadurch wird dem Fahrer sofort bei Erfassen des Objekts signalisiert, dass eine Gefahr erfasst wurde. Dazu muss die Position des Objekts noch nicht ermittelt worden sein. Die Warnwirkung tritt vorteilhafterweise verzögerungsfrei ein. Der überlagerte Bereich wird nach der Erzeugung der L-Formen auf die Position des Objekts geschwenkt.

Ist der überlagerte Bereich auf das Objekt ausgerichtet, kann er der Bewegung des Objekts nachgeführt werden. Der überlagerte Bereich kann auch nur kurzzeitig erzeugt werden. Dies vermindert die Gefahr, dass andere Verkehrsteilnehmer geblendet werden, lenkt jedoch den Blick des Fahrers auf das Objekt.

Weiterhin kann die L-Form der Hell-Dunkel-Grenzen des linken Lichtstrahls von einem im Strahlengang des linken Scheinwerfers angeordneten linken mechanischen Element und die L-Form des rechten Lichtstrahls von einem im Strahlengang des rechten Scheinwerfers angeordneten rechten mechanischen Element erzeugt werden. Dabei werden zum Erzeugen des überlagerten Bereichs das linke und/oder das rechte mechanische Element in Abhängigkeit von der Position des Objekts zumindest horizontal im Strahlengang verschoben. Das Verschieben der mechanischen Elemente in den Strahlengängen stellt dabei vorteilhafterweise eine einfache Art und Weise dar, unterschiedliche Lichtverteilungen zu erzeugen. Dabei kann der überlagerte Bereich entweder durch Verschieben der mechanischen Elemente alleine, dem Verschwenken der Scheinwerfer alleine oder einer Kombination von Verschieben und Verschwenken gebildet werden.

Zum Erzeugen des überlagerten Bereichs kann das linke mechanische Element nach rechts im Strahlengang des linken Scheinwerfers und/oder das rechte mechanische Element nach links im Strahlengang des rechten Scheinwerfers verschoben werden. Dadurch kann der überlagerte Bereich vorteilhafterweise auf die Größe des Objekts eingestellt werden. Dies verhindert einen unnötig breiten überlagerten Bereich, der andere Verkehrsteilnehmer blendet.

Insbesondere wird die Leuchtweite der zweiten Gesamtlichtverteilung nach oder während der Bildung des überlagerten Bereichs abgesenkt. Dadurch kann vorteilhafterweise gewährleistet werden, dass die durch die Erzeugung der L-Formen entstehende Leuchtweite derart reguliert wird, dass kein anderer Verkehrsteilnehmer geblendet wird. Insbesondere wird die Leuchtweite soweit abgesenkt, dass der überlagerte Bereich das Objekt nicht direkt anstrahlt. Dies ist dann von Vorteil, wenn das Objekt ein dynamisches Objekt, also ein Fußgänger, Tier oder Radfahrer, ist. Das dynamische Objekt wird dann insbesondere nicht geblendet und kann trotzdem vom Fahrer gut wahrgenommen werden. Die Absenkung der Leuchtweite kann dabei beispielsweise über eine herkömmliche Niveauregulierung geschehen. Dabei wird das Niveau der Scheinwerfer beispielsweise um einen Winkel in einem Bereich von 1° bis 5° abgesenkt. Insbesondere wird der Scheinwerfer um 3° abgesenkt. Dabei werden die Scheinwerfer insbesondere um eine horizontale Achse verschwenkt. Alternativ kann die Leuchtweite auch durch Ausmaskieren bestimmter Lichtbereiche abgesenkt werden. Die Leuchtweite wird dabei insbesondere soweit abgesenkt, dass der überlagerte Bereich bis zum Objekt reicht, das Objekt aber nicht direkt angeleuchtet wird. Dadurch kann vorteilhafterweise verhindert werden, dass dynamische Objekte, wie beispielsweise Fußgängern, Tieren oder Radfahrern, geblendet werden. Bei statischen Objekte, wie beispielsweise reflektierenden Baustellenmarkierungen, kann dadurch verhindert werden, dass diese blendendes Licht zum Fahrer reflektieren.

Der überlagerte Bereich wird erfindungsgemäß durch Schwenken der Lichtemissionsrichtungen der Scheinwerfer um eine vertikale Achse auf die ermittelte Position erzeugt. Insbesondere ist der Winkel, um den die Scheinwerfer um die vertikale Achse verschwenkt werden, nach dem Verschwenken im Wesentlichen gleich, so dass die Scheinwerfer parallel zueinander ausgerichtet sind. Es ist also der horizontale Schwenkwinkel der beiden Scheinwerfer gleich. In der Regel sind die horizontalen Schwenkwinkel der Scheinwerfer nicht gleich. Zur Erzeugung einer normalen Abblendlichtverteilung, Stadtlichtverteilung oder einer maskierten Dauerfernlichtverteilung sind die Scheinwerfer oft auseinander geschwenkt. Dies ist insbesondere der Fall, wenn ein Kurvenlicht realisiert wird oder Seitenbereiche der Fahrbahn besser ausgeleuchtet werden als der Mittelbereich der Fahrbahn, wie es beispielsweise bei einer Stadtlichtverteilung der Fall ist. Durch die parallele Ausrichtung der Scheinwerfer entsteht ein schmaler überlagerter Bereich. Dadurch kann vorteilhafterweise verhindert werden, dass der überlagerte Bereich einen zu großen Bereich in der zweiten Gesamtlichtverteilung einnimmt, der eventuell andere Verkehrsteilnehmer blendet.

Alternativ kann der überlagerte Bereich auch dadurch erzeugt werden, dass die Lichtemissionsrichtungen der beiden Scheinwerfer um die vertikale Achse aufeinander zu geschwenkt werden, wobei beide Scheinwerfer nach innen verschwenkt werden. Die Lichtemissionsrichtungen der Scheinwerfer sind dann nicht parallel zueinander ausgerichtet, sondern konvergent ausgerichtet, so dass sich die Lichtstrahlen vor dem Fahrzeug schneiden. Dadurch kann bestimmt werden, in welchem Abstand vor dem Fahrzeug die vertikalen Hell-Dunkel-Grenzen überlagert werden. Beispielsweise liegen die vertikalen Hell-Dunkel-Grenzen der L-Formen in einem Abstand von etwa 20 bis 60 m vor dem Fahrzeug aufeinander. Insbesondere liegen die vertikalen Hell-Dunkel-Grenzen in einem Abstand von etwa 40 m vor dem Fahrzeug aufeinander. Der überlagerte Bereich beginnt dann in diesem Abstand vor dem Fahrzeug.

Erfindungsgemäß wird die Größe und/oder Breite des Objekts erfasst. Es werden ein linker Schwenkwinkel für den linken Scheinwerfer um die vertikale Achse und ein rechter Schwenkwinkel für den rechten Scheinwerfer um die vertikale Achse in Abhängigkeit von der Größe und/oder Breite des Objekts ermittelt. Der linke Scheinwerfer wird dann um den ermittelten linken Schwenkwinkel und der rechte Scheinwerfer um den ermittelten rechten Schwenkwinkel verschwenkt, so dass die Breite und/oder Größe des überlagerten Bereichs abhängig von der Breite und/oder Größe des Objekts ist. Dadurch kann vorteilhafterweise der überlagerte Bereich an die Größe und/oder Breite des Objekts angepasst werden. Es kann vorteilhafterweise gewährleistet werden, dass das Objekt ausreichend beleuchtet wird. Der überlagerte Bereich kann beispielsweise eine Breite von 0,2 bis 0,8 m umfassen. Bevorzugt ist der überlagerte Bereich 0,5 m breit.

Das erfindungsgemäße Verfahren markiert ein Objekt vorteilhafterweise nicht nur für den Fahrer selbst, sondern auch für andere Verkehrsteilnehmer. Die Warnwirkung ist daher nicht nur dem Fahrer selbst vorbehalten, sondern steht allen Verkehrsteilnehmern zur Verfügung.

Die erste Gesamtlichtverteilung ist, wie bereits erwähnt, beispielsweise eine Lichtverteilung eines maskierten Dauerfernlichts. Die Ausgangslichtverteilung kann ein Abblendlicht, ein asymmetrisches Abblendlicht oder eine Stadtlichtverteilung sein. Zudem kann die Ausgangslichtverteilung auch tatsächlich das maskierte Dauerfernlicht sein. Dann müssen die L-Formen der Hell-Dunkel-Grenzen nicht mehr erzeugt werden. Es muss dann lediglich noch der überlagerte Bereich erzeugt werden und dieser auf die Position des erfassten Objekts geschwenkt werden. Die zweite Gesamtlichtverteilung ist insbesondere ein Markierungslicht.

In einer anderen Ausgestaltung wird ermittelt, ob das Erzeugen der zweiten Gesamtlichtverteilung andere Verkehrsteilnehmer blenden würde. Die zweite Gesamtlichtverteilung wird nicht erzeugt, wenn ermittelt wurde, dass andere Verkehrsteilnehmer geblendet werden würden. Dabei wird insbesondere ermittelt, ob sich überhaupt andere Verkehrsteilnehmer auf der Straße befinden, die für eine bereits ausreichende Beleuchtung des Objekts sorgen. In diesem Fall ist es nicht erforderlich, die zweite Gesamtlichtverteilung zu erzeugen. Zudem wird dadurch die Gefahr verringert, andere Verkehrsteilnehmer zu blenden.

Die Erfindung betrifft ferner eine Scheinwerferanordnung für ein Fahrzeug mit einem rechten und einem linken Scheinwerfer, wobei mit dem rechten Scheinwerfer ein rechter Lichtstrahl und mit dem linken Scheinwerfer ein linker Lichtstrahl emittierbar ist, mittels denen eine erste Gesamtlichtverteilung erzeugbar ist, bei der ein Mittelbereich mit geringerer Leuchtweite bildbar ist und beidseitig neben diesem Mittelbereich Seitenbereiche mit größerer Leuchtweite bildbar sind. Die Scheinwerferanordnung umfasst ferner eine Erfassungseinrichtung, mittels welcher zumindest ein Objekt in Fahrtrichtung vor dem Fahrzeug erfassbar und die Position des Objekts ermittelbar ist. Zudem sind mittels einer Steuervorrichtung die Scheinwerfer zum Erzeugen einer zweiten Gesamtlichtverteilung derart ansteuerbar, dass die Seitenbereiche der ersten Gesamtlichtverteilung zumindest teilweise bei der Position des Objekts überlagerbar sind, so dass ein überlagerter Bereich bildbar ist, in dem sich die Lichtintensität aus der Lichtintensität des linken und des rechten Lichtstrahls zusammensetzt. Die erfindungsgemäße Scheinwerferanordnung ist insbesondere dazu geeignet, das erfindungsgemäße Verfahren auszuführen. Die Scheinwerferanordnung weist daher alle Vorteile des erfindungsgemäßen Verfahrens auf.

In den Scheinwerfern kann zudem eine Blendenwalze angeordnet sein, welche mit einem drehbaren Aktuator gekoppelt sind. Die Blendenwalze kann dabei mehrere Blendenkanten umfassen, welche die Hell-Dunkel-Grenzen der erzeugbaren Gesamtlichtverteilungen bestimmen. Durch Drehen des drehbaren Aktuators kann die Stellung der Blendenwalze verändert werden.

Die Blendenwalze kann zudem horizontal und/oder vertikal verschiebbar angeordnet sein, so dass zum Ausrichten der Lichtstrahlen die Blendenwalze verschoben werden kann.

Zudem können die Scheinwerfer schwenkbar gelagert sein, so dass zum Ausrichten der Lichtstrahlen die Scheinwerfer verschwenkt werden können.

Die Erfindung wird nun anhand von Ausführungsbeispielen mit Bezug zu den beigefügten Zeichnungen erläutert.
- Fig. 1: zeigt schematisch ein Ausführungsbeispiel eines Scheinwerfers der erfindungsgemäßen Scheinwerferanordnung,
- Fig. 2: zeigt schematisch ein Ausführungsbeispiel der erfindungsgemäßen Scheinwerferanordnung,
- Fig. 3: zeigt die Abstrahlcharakteristik einer beispielhaften Ausgangslichtverteilung auf einem Messschirm, die von einem Ausführungsbeispiel des erfindungsgemäßen Verfahrens erzeugt wird,
- Fig. 4: zeigt die Abstrahlcharakteristik der Ausgangslichtverteilung aus Figur 3 auf der Straße,
- Fig. 5: zeigt die Abstrahlcharakteristik der ersten Gesamtlichtverteilung auf einem Messschirm,
- Fig. 6: zeigt die Abstrahlcharakteristik der ersten Gesamtlichtverteilung auf der Straße,
- Fig. 7: zeigt die Abstrahlcharakteristik der zweiten Gesamtlichtverteilung auf einem Messschirm und
- Fig. 8: zeigt die Abstrahlcharakteristik der zweiten Gesamtlichtverteilung auf der Straße.

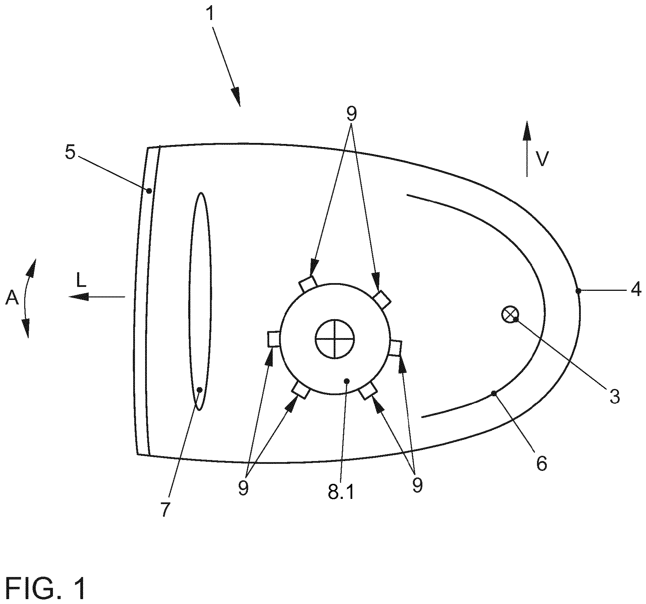

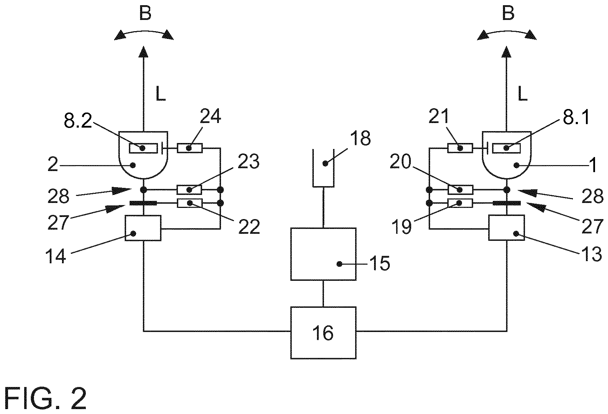

Die Scheinwerferanordnung, die allgemein in Figur 2 gezeigt ist, umfasst zwei beabstandete Projektionsscheinwerfer 1 und 2, die vorne auf der rechten und linken Seite eines Fahrzeugs auf an sich bekannte Weise angeordnet sind. Einer dieser Projektionsscheinwerfer 1 ist in Fig. 1 gezeigt. Der auf der anderen Seite angeordnete Projektionsscheinwerfer 2 ist im Wesentlichen identisch aufgebaut.

In Fig. 1 ist ein Schnitt des rechten Projektionsscheinwerfers 1 in einer Ebene dargestellt, die parallel zu der von der Fahrzeuglängsachse und der Vertikalen V aufgespannten Ebene ist. Der Projektionsscheinwerfer 1 umfasst auf an sich bekannte Art und Weise eine Lichtquelle 3, die von einem als Rotationsellipsoid ausgebildeten Reflektor 6 umgeben ist. Der Reflektor 6 weist somit zwei Brennpunkte auf. Die Lichtquelle 3 befindet sich in einem der Brennpunkte des Reflektors 6. Das von der Lichtquelle 3 emittierte Licht wird von dem Reflektor 6 in Lichtemissionsrichtung L des Projektionsscheinwerfers 1 in Richtung einer Projektionslinse 7 reflektiert. Eine Blendenwalze 8 mit den Blendenkanten 9 ist derart in dem Scheinwerfer 1 angeordnet, dass sich die Blendenkanten bei entsprechender Anordnung im Strahlengang an dem Brennpunkt der Projektionslinse 7 und nahe dem zweiten Brennpunkt des Reflektors 6 befinden. Die Lichtquelle 3, der Reflektor 6, die Linse 7 und die Blendenwalze 8.1 sind innerhalb eines Gehäuses 4 angeordnet, das von einer Lichtscheibe 5 abgeschlossen ist. Die Form der Hell-Dunkel-Grenze der Gesamtlichtverteilung des Projektionsscheinwerfers 1 lässt sich dadurch verändern, dass die Blendenwalze 8.1 gedreht wird.

Die Lichtquelle 3 kann dabei stellvertretend für eine Leuchtdiodenmatrix, eine Xenon-Lichtquelle oder sonstige bekannte Lichtquellen stehen.

Die Art und Weise, wie verschiedene Gesamtlichtverteilungen durch die Drehung der Blendenwalze 8.1 oder Verschieben der Blendenwalze 8.1 erzeugt werden können, ist beispielsweise in der DE 10 2012 022 524 A1 oder der EP 0 935 728 B1 beschrieben, deren diesbezüglicher Inhalt durch Bezugnahme in die vorliegende Anmeldung aufgenommen wird.

Mit Bezug zur Figur 2 wird im Folgenden ein Ausführungsbeispiel der Scheinwerferanordnung beschrieben, welche einen rechten Scheinwerfer 1 und einen linken Scheinwerfer 2 umfasst, wie er in Figur 1 gezeigt ist.

Der rechte Scheinwerfer 1 der Scheinwerferanordnung ist mit einem Steuergerät 13 verbunden, der linke Scheinwerfer 2 mit einem Steuergerät 14. Mittels der Steuergeräte 13 und 14 werden die Teillichtverteilungen der Scheinwerfer 1 und 2 gesteuert, welche überlagert eine Gesamtlichtverteilung ergeben.

Die Steuergeräte 13 und 14 steuern eine Leuchtweitenregulierung für die Scheinwerfer 1 und 2, bei welcher die Scheinwerfer 1 und 2 um eine horizontale Achse 27 mittels des Aktuators 19 bzw. 22 schwenkbar sind. Die Lichtemissionsrichtung L der Scheinwerfer 1 und 2 kann auf diese Weise in Richtung des Pfeils A (Figur 1) geschwenkt werden. Ferner steuern die Steuergeräte 13 und 14 die Aktuatoren 20 bzw. 23, mit denen die Scheinwerfer 1 und 2 um eine vertikale Achse 28 schwenkbar sind. Mittels der Aktuatoren 20 und 23 kann die Lichtemissionsrichtung L des Scheinwerfers 1 bzw. des Scheinwerfers 2 in Richtung des Pfeils B geschwenkt werden. Die Aktuatoren 20 und 23 sind beispielsweise Teil eines bereits vorhandenen Kurvenlichts.

Schließlich steuern die Steuergeräte 13 und 14 die Drehung der Blendenwalze 8 sowie die vertikale Lage der Blendenwalze 8 für den rechten und linken Scheinwerfer 1 und 2, mittels der Aktuatoren 21 und 24. Die Aktuatoren 21 bzw. 24 sind mit den jeweiligen Blendenwalzen 8.1 bzw. 8.2 gekoppelt. Werden die Aktuatoren 21 bzw. 24 gedreht, drehen sich auch die Blendenwalzen 8.1 bzw. 8.2. Wird der Aktuator 21 bzw. 24 ausgehend von seiner Lage, wie sie in Figur 1 gezeigt ist, im Uhrzeigersinn gedreht, drehen sich auch die Blendenwalzen 8.1 bzw. 8.2 im Uhrzeigersinn. Bei einer Drehung des Aktuators 21 bzw. 24 entgegen dem Uhrzeigersinn drehen sich auch die Blendenwalzen 8.1 bzw. 8.2 entgegen dem Uhrzeigersinn. Die Blendenwalzen 8.1 und 8.2 können dabei in Abhängigkeit von der Anzahl der Blendenkanten 9 eine bestimmte Anzahl von Stellungen einnehmen. Die für die Gesamtlichtverteilung erzeugte Hell-Dunkel-Grenze ist dann abhängig von der Stellung der Blendenwalzen 8.1 und 8.2.

Weiterhin können die Blendenwalzen 8.1 und 8.2 durch die Aktuatoren 21 bzw. 24 im Strahlengang der Scheinwerfer 1 bzw. 2 vertikal oder horizontal verschoben werden.

Des Weiteren umfasst die Scheinwerferanordnung eine Einrichtung 18 zum Erfassen eines Objekts in Fahrtrichtung vor dem Fahrzeug. Dabei kann es sich bei dem Objekt um ein statisches Objekt oder ein dynamisches Objekt handeln. Insbesondere handelt es sich bei dem Objekt nicht um ein entgegenkommendes oder vorausfahrendes Kraftfahrzeug. Ein statisches Objekt kann beispielsweise ein Hindernis auf der Fahrbahn, beispielsweise eine Baustellenbegrenzung, sein. Ein dynamisches Objekt kann ein Fußgänger sein, der sich auf dem Gehsteig befindet oder der die Fahrbahn überqueren möchte bzw. gerade überquert. Das Objekt kann auch ein unbeleuchteter Fahrradfahrer sein, der auf einem Radweg neben der Fahrbahn oder am Fahrbahnrand fährt.

Bei der Erfassungseinrichtung 18 handelt es sich insbesondere um ein Kamerasystem mit angeschlossener Bildverarbeitungseinheit 15. Das Kamerasystem 18 kann insbesondere die Position des statischen Objekts sowie die Position und die Bewegungsrichtung eines dynamischen Objekts erfassen.

Das Kamerasystem 18 umfasst dazu ein an sich bekanntes Infrarot-Nachtsichtsystem, welches Individuen, insbesondere Fußgänger aufgrund der Wärmeabstrahlung auch bei Dämmerung oder Dunkelheit gegenüber der kühleren Umgebung erkennen kann. Statische Objekte können beispielsweise über Mustererkennung erfasst werden. Die Bildverarbeitungseinheit 15 kann die von dem Kamerasystem 18 erfassten Bilder dahingehend analysieren, ob sich statische und/oder dynamische Objekte in dem erfassten Bildausschnitt befinden. Bei dynamischen Objekten werden die Bilddaten so ausgewertet, dass eine Prognose der voraussichtlichen Trajektorie des dynamischen Objekts möglich ist.

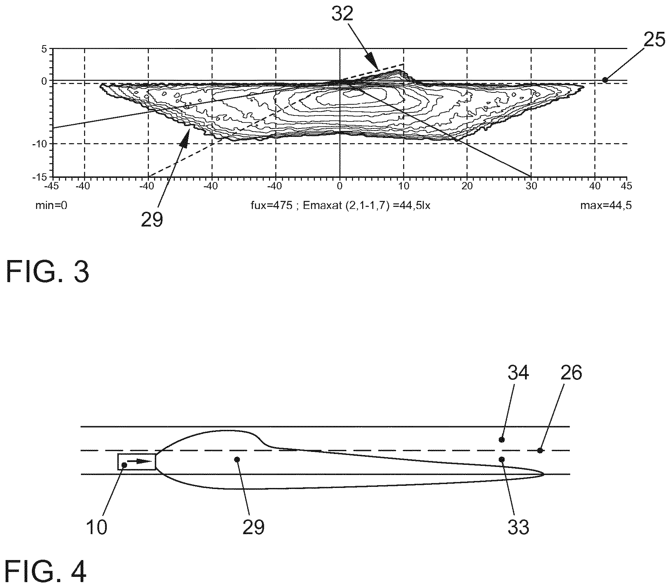

Im Folgenden werden mit Bezug zu den Figuren 3 - 8 verschiedene Gesamtlichtverteilungen beschrieben, welche von den Scheinwerfern 1 und 2 der erfindungsgemäßen Scheinwerferanordnung allgemein erzeugt werden können:
Eine von der Scheinwerferanordnung erzeugbare Ausgangslichtverteilung 29 kann eine herkömmliche Abblendlichtverteilung, wie sie in den Figuren 3 und 4 gezeigt ist, sein. Die von der Scheinwerferanordnung erzeugte Ausgangslichtverteilung 29 ist in Figur 3 als Isolux-Diagramm auf einem Messschirm und in Figur 4 anhand einer Hell-Dunkel-Grenze auf einer Straße gezeigt. Die Ausgangslichtverteilung 29 ist asymmetrisch hinsichtlich einer Mittelachse 26, die bei einer geraden Fahrbahn die Fahrbahn 33 des Fahrzeugs 10, welche die Scheinwerferanordnung umfasst, von der Gegenfahrbahn 34 abgrenzt. Die Leuchtweite im Bereich der Gegenfahrbahn 34 ist sehr viel geringer als die Leuchtweite im Bereich der Fahrbahn 33 und bei Rechtsverkehr auch geringer als auf der rechten Seite neben der Fahrbahn 33. Diese Asymmetrie ist auch bei der in Figur 3 gezeigten Lichtverteilung auf dem Messschirm erkennbar. Auf der rechten Seite der Ausgangslichtverteilung 29 ergibt sich ein Anstieg 32, der einen Winkel von 15° mit der Horizontalen 25 einschließt. Der Verlauf der Hell-Dunkel-Grenze bzw. der Lichtverteilung auf dem Messschirm entspricht bei dem vorliegenden Ausführungsbeispiel den Vorgaben der derzeitigen europäischen Norm ECE-R 112 für ein Abblendlicht eines Scheinwerfers.

Alternativ kann es sich bei der Ausgangslichtverteilung auch um ein herkömmliches Stadtlicht, Basislicht oder Schlechtwetterlicht handeln. Im Stadtverkehr sind die Fahrbahnen meist gut ausgeleuchtet, während seitliche Bereiche neben der Fahrbahn weniger gut beleuchtet sind. Daher zeichnet sich eine Stadtlichtverteilung dadurch aus, dass die seitlichen Bereiche der Fahrbahn von den Scheinwerfern 1 und 2 besser ausgeleuchtet werden, als die Mitte der Fahrbahn. Dies wird beispielsweise dadurch erreicht, dass die Scheinwerfer 1 und 2 in einer auseinander geschwenkten Stellung betrieben werden. Die horizontalen Schwenkwinkel der Scheinwerfer 1 und 2 sind nicht gleich, so dass die Scheinwerfer 1 und 2 nicht parallel zueinander ausgerichtet sind.

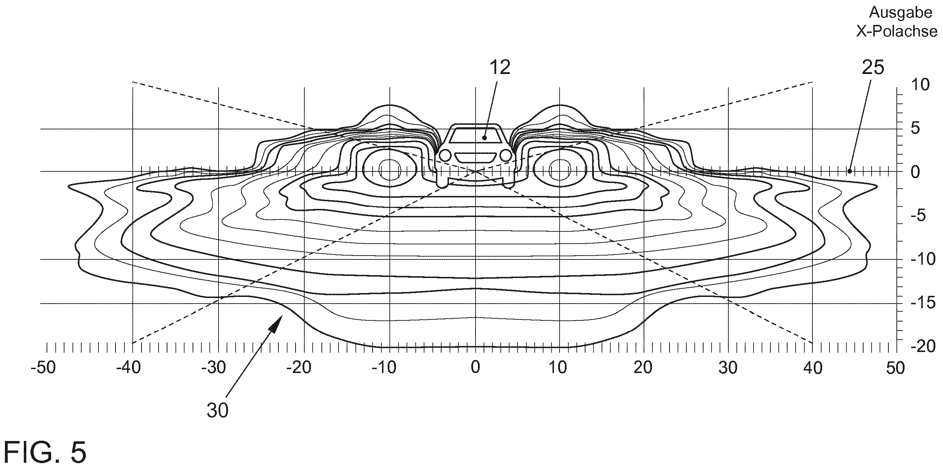

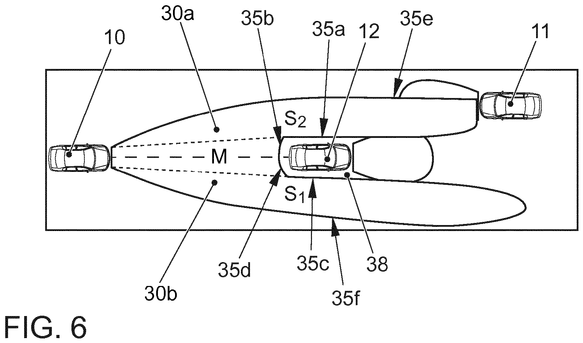

Die erste von der erfindungsgemäßen Scheinwerferanordnung bzw. dem erfindungsgemäßen Verfahren erzeugte Gesamtlichtverteilung 30 ist als Isolux-Diagramm auf einem Messschirm in Figur 5 gezeigt und als Hell-Dunkel-Grenze auf der Straße in Figur 6 gezeigt. Bei der ersten Gesamtlichtverteilung 30 handelt es sich um ein maskiertes Dauerfernlicht. Diese Gesamtlichtverteilung 30 zeichnet sich dadurch aus, dass sie in Richtung eines erfassten Verkehrsteilnehmers 12, d.h. im Bereich M der Gesamtlichtverteilung 30, eine Leuchtweite aufweist, die so geregelt wird, dass sie zumindest geringer als der Abstand zu dem erfassten Verkehrsteilnehmer 12 ist und insbesondere bis zu dem anderen Verkehrsteilnehmer 12 reicht. Bei dem erfassten Verkehrsteilnehmer 12 handelt es sich insbesondere um ein vorausfahrendes Fahrzeug. In diesem Fall kann die Leuchtweite im Bereich M der Gesamtlichtverteilung 30 beispielsweise bis zur hinteren Stoßstange des vorausfahrenden Fahrzeugs 12 reichen.

Auf zumindest einer Seite neben dem Mittelbereich M in Richtung des erfassten Verkehrsteilnehmers 12 ist ein Seitenbereich S₁ gebildet, bei dem die Leuchtweite größer ist als die Leuchtweite im Bereich M der Gesamtlichtverteilung 30. Neben dem Verkehrsteilnehmer 12 wird somit vorbeigeleuchtet, um dem Fahrer des Fahrzeugs 10 eine bessere Ausleuchtung des Verkehrsbereichs vor dem Fahrzeug 10 bereitzustellen. Die Leuchtweite im Seitenbereich S₁ kann beispielsweise der Leuchtweite bei einer herkömmlichen Fernlichtfunktion entsprechen. Es wird auch auf der anderen Seite bei der ersten Gesamtlichtverteilung 30 ein Seitenbereich S₂ gebildet, welcher auch eine größere Leuchtweite besitzt als die Leuchtweite in dem Mittelbereich M. Auch die Leuchtweite des Seitenbereichs S₂ kann der Leuchtweite einer herkömmlichen Fernlichtfunktion entsprechen, so dass die Gesamtlichtverteilung 30 einem herkömmlichen Fernlicht entsprechen kann, bei dem in der Lichtverteilung ein Bereich beim erfassten Verkehrsteilnehmer 12 und in Fahrtrichtung vor dem Verkehrsteilnehmer 12 ausgeschnitten ist. Auf diese Weise kann dem Fahrer des Fahrzeugs 10 eine optimale Ausleuchtung des Verkehrsraums bereitgestellt werden, ohne den anderen Verkehrsteilnehmer 12 zu blenden. Wird im Bereich der Ausleuchtung der Scheinwerferanordnung ein noch weiterer Verkehrsteilnehmer, wie beispielsweise ein entgegenkommendes Fahrzeug 11 erfasst, kann die Leuchtweite ferner auch in Richtung dieses Verkehrsteilnehmers 11 so geregelt werden, dass sie nur bis zu diesem Verkehrsteilnehmer 11 reicht.

In dem in Figur 5 gezeigten Fall wird die Leuchtweite im Seitenbereich S₂ der ersten Gesamtlichtverteilung 30 kontinuierlich an den Abstand des eigenen Fahrzeugs 10 zu dem entgegenkommenden Fahrzeug 11 angepasst. Des Weiteren ist es gemäß einer anderen Ausgestaltung möglich, dass die Breite des Mittelbereichs M so gewählt wird, dass sich in dem Korridor 38 zwischen den Seitenbereichen S₁ und S₂ alle erfassten Fahrzeuge 11, 12 befinden. Auch in diesem Fall kann jedoch die Leuchtweite für den zweiten Seitenbereich S₂ in Abhängigkeit insbesondere von der Position eines entgegenkommenden Fahrzeugs 11 geregelt werden.

Für die Regelung der Leuchtweite im Mittelbereich M und gegebenenfalls in den Seitenbereichen S₁ und S₂ wird der Steuervorrichtung 16 von einer Bildverarbeitungsvorrichtung 15 kontinuierlich Daten zu anderen Fahrzeugen 11, 12 in Fahrtrichtung vor dem Fahrzeug 10 übertragen. In Abhängigkeit von der Position anderer erfasster Verkehrsteilnehmer 12 bzw. 11 überträgt die Steuervorrichtung 16 Steuersignale an die Steuergeräte 13 und 14 für die Scheinwerfer 1 und 2. Die Steuergeräte 13 und 14 steuern daraufhin die Aktuatoren 19 bis 21 für den rechten Scheinwerfer 1 und die Aktuatoren 22 bis 24 für den linken Scheinwerfer 2 so an, dass die gewünschte erste Gesamtlichtverteilung 30 erzeugt wird. Dabei wird die vertikale Hell-Dunkel-Grenze zum einen durch ein Verschwenken der Scheinwerfer 1 und 2 um die vertikalen Achsen 38 und zum anderen durch Drehen der Blendenwalzen 8.1 bzw. 8.2 mittels der Aktuatoren 21 und 24 erzeugt. Die horizontale Hell-Dunkel-Grenze im Mittelbereich M, d.h. die Leuchtweite im Mittelbereich M, wird hingegen nicht von einer Verlagerung der Blendenwalzen 8.1 und 8.2 erzeugt, sondern bevorzugt ausschließlich durch die Leuchtweitenregulierung, d.h. durch ein Verschwenken der Scheinwerfer 1 und 2 um die horizontale Achse 37 mittels der Aktuatoren 19 und 22.

Die erste Gesamtlichtverteilung 30 wird aus einem linken Lichtstrahl 30a und einem rechten Lichtstrahl 30b zusammengesetzt. Der linke Lichtstrahl 30a wird dabei vom linken Scheinwerfer 2 emittiert und der rechte Lichtstrahl 30b wird vom rechten Scheinwerfer 1 emittiert. Die beiden Lichtstrahlen 30a und 30b weisen Hell-Dunkel- Grenzen mit einer L-Form auf, die zusammengesetzt zur ersten Gesamtlichtverteilung 30 eine U-Form bilden. Die L-Form der Hell-Dunkel-Grenze des linken Lichtstrahls 30a umfasst dabei eine innere vertikale Hell-Dunkel-Grenze 35a, die sich links neben dem erfassten Verkehrsteilnehmer 12 befindet, und eine horizontale Hell-Dunkel-Grenze 35b. Die L-Form der Hell-Dunkel-Grenze des rechten Lichtstrahls 30b umfasst ebenso eine innere vertikale Hell-Dunkel-Grenze 35c, die sich rechts neben dem erfassten Verkehrsteilnehmer 12 befindet, und eine horizontale Hell-Dunkel-Grenze 35d. Die äußeren Hell-Dunkel-Grenzen 35e und 35f des linken 30a bzw. rechten Lichtstrahls 30b tragen nicht zur L-Form der Hell-Dunkel-Grenze bei. Die L-Formen werden insbesondere von den Hell-Dunkel-Grenzen der Seitenbereiche S₁ und S₂ sowie der Hell-Dunkel-Grenze des Mittelbereichs M gebildet, welche den Korridor 38 bilden, in dem sich der erfasste Verkehrsteilnehmer 12 befindet.

Die in Bezug auf die Hell-Dunkel-Grenze verwendeten Begriffe horizontal und vertikal beziehen sich auf die Lichtverteilung auf einem senkrecht zur Lichtemissionsrichtung L angeordneten Messschirm. Eine horizontale Hell-Dunkel-Grenze ist in diesem Fall parallel zu der Horizontalachse 25, die bei einem 10 Meter entfernten Schirm 10 Zentimeter unterhalb der Anbauhöhe der Scheinwerfer 1 und 2 angeordnet ist. Eine vertikale Hell-Dunkel-Grenze verläuft senkrecht zu der Horizontalachse 25.

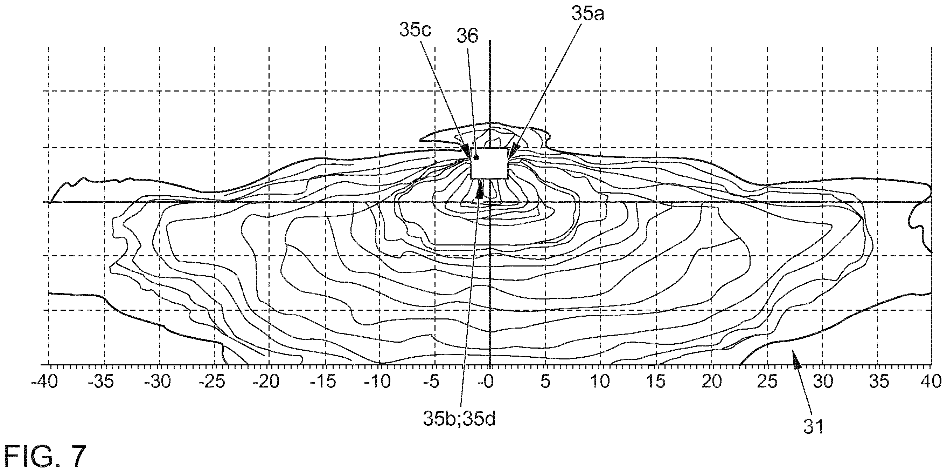

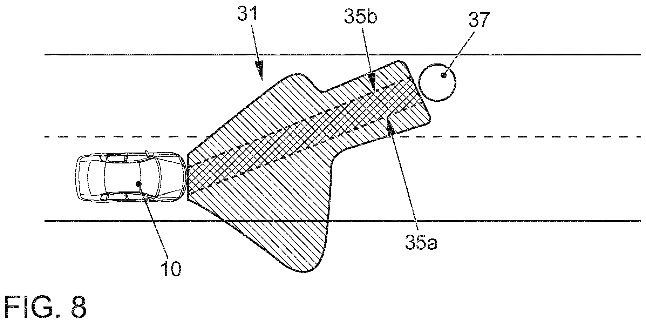

Mit Bezug zu den Figuren 7 und 8 wird die zweite Gesamtlichtverteilung 31 erläutert, die von dem erfindungsgemäßen Verfahren erzeugt wird.

In Figur 7 ist die zweite Gesamtlichtverteilung 31 als Isolux-Diagramm auf einem Messschirm und in Figur 8 als Hell-Dunkel-Grenze auf einer Fahrbahn dargestellt.

Bei der zweiten Gesamtlichtverteilung 31 handelt es sich um ein Markierungslicht. Damit werden Objekte 37, die in der Dämmerung oder Dunkelheit schlecht gesehen werden können, in den Fokus des Fahrers gerückt. Dadurch kann der Fahrer Gefahren, die von diesen Objekten 37 ausgehen, rechtzeitig erkennen und reagieren. Das Markierungslicht stellt insbesondere ein Instrument zur Blicklenkung des Fahrers auf das Objekt 37 dar.

Bei der zweiten Gesamtlichtverteilung 31 sind die beiden Lichtstrahlen 30a und 30b derart ausgerichtet, dass sich die Seitenbereiche S₁ und S₂, welche die Lichtstrahlen 30a und 30b erzeugen, wenn die erste Gesamtlichtverteilung 30 erzeugt werden würde, überlagert werden. Dabei bildet sich in der zweiten Gesamtlichtverteilung 31 ein überlagerter Bereich 36 maximaler Lichtemission, in dem sich die Lichtintensitäten der beiden Lichtstrahlen 30a und 30b addieren. Dieser Bereich 36 ist dabei auf die Position des erfassten Objekts 37 ausgerichtet.

Die Leuchtweite des überlagerten Bereichs 36 wird insbesondere über den vertikalen Schwenkwinkel der Scheinwerfer 1, 2 geregelt. Dieser vertikale Schwenkwinkel bestimmt sich aus dem Vertikalwinkel zu der Horizontalebene, die die Lichtquelle 3 der Scheinwerfer 1 und 2 schneidet (also 0°) oder einem Vertikalwinkel, der an der Position des erfassten Objekts 37 einer ersten Höhe zwischen 0,5 m bis 1,0 m entspricht, je nachdem, welcher Vertikalwinkel weiter nach unten gerichtet ist. Eine Beleuchtung bis in diese Höhe ist in der Regel ausreichend, um das Objekt 37 noch gut zu erkennen, ohne es dabei aber zu blenden. Die exakte Höhe wird insbesondere an die Augenhöhe des Fußgängers oder Radfahrers angepasst, wobei sie so viel tiefer liegen sollte, dass eine Blendung des Fußgängers oder Radfahrers ausgeschlossen ist. Hierbei ist ferner zu berücksichtigen, in welcher Höhe die Lichtquellen 3 der Scheinwerfer 1, 2 am Fahrzeug 10 angeordnet sind. Je nach Fahrzeugtyp kann diese Höhe auch insbesondere mehr als 1,0 m betragen.

Alternativ kann auch die Leuchtweite bis zu dem erfassten Objekt 37 reichen. Dann wird die Leuchtweite über eine Niveauregulierung leicht korrigiert, so dass das erfasste Objekt nicht direkt angestrahlt wird. Dadurch kann die Blendwirkung des Markierungslichts minimiert werden.

Die zweite Gesamtlichtverteilung 31 wird insbesondere dadurch gebildet, dass die vertikalen Hell-Dunkel-Grenzen 35a und 35c der L-Formen des linken 30a und rechten Lichtstrahls 30b überlagert werden. Dies kann einfach dadurch geschehen, dass die horizontalen Schwenkwinkel der beiden Scheinwerfer 1, 2 gleich eingestellt werden, so dass die Scheinwerfer 1, 2 parallel zueinander ausgerichtet werden, und die L-Formen in den Lichtstrahlen 30a und 30b durch Einbringen einer Blendenkante 9 durch Drehen der Blendenwalzen 8.2 bzw. 8.1 erzeugt werden. Zudem werden die horizontalen Schwenkwinkel beider Scheinwerfer 1 und 2 auf die Position des erfassten Objekts 37 geschwenkt. Bei der Position des erfassten Objekts 37 entsteht dann der überlagerte Bereich 36 maximaler Lichtintensität, durch welchen der Fahrer auf das Objekt 37 aufmerksam gemacht wird. Bewegt sich das Objekt 37, so kann der Bereich 36 dem Objekt 37 nachgeführt werden.

Alternativ können die horizontalen Winkelbeträge, um welche die Scheinwerfer 1 und 2 verschwenkt werden zwar gleich sein, jedoch entgegengesetzte Richtungen aufweisen. Die Scheinwerfer 1 und 2 werden dabei aufeinander zu geschwenkt, so dass sowohl der rechte Scheinwerfer 1 und der linke Scheinwerfer 2 nach innen verschwenkt werden. Dadurch kann der Abstand des überlagerten Bereichs 36 von dem Fahrzeug 10 eingestellt werden.

Sind die Scheinwerfer 1 und 2 parallel zueinander ausgerichtet, kann der Abstand des überlagerten Bereichs 36 von dem Fahrzeug 10 durch ein Verschwenken der Scheinwerfer 1 und 2 um eine horizontale Achse 27 eingestellt werden.

Neben dem überlagerten Bereich 36 fällt die Lichtintensität der zweiten Gesamtlichtverteilung 31 rapide ab, in der Regel um 50%. Dadurch kann gewährleistet werden, dass in der zweiten Gesamtlichtverteilung lediglich ein schmaler Bereich eine sehr hohe Lichtintensität mit potentieller Blendgefahr für andere Verkehrsteilnehmer aufweist. Werden die Bereiche neben dem überlagerten Bereich aus der zweiten Gesamtlichtverteilung ausmaskiert, stellt der überlagerte Bereich 36 einen Lichtpfad zu dem erfassten Objekt bereit, der die Aufmerksamkeit des Fahrers auf die markierte Stelle lenkt.

Im Folgenden wird ein erstes Ausführungsbeispiel des erfindungsgemäßen Verfahrens erläutert.

Es wird zunächst darauf hingewiesen, dass im erfindungsgemäßen Verfahren die erste Gesamtlichtverteilung 30 nicht erzeugt werden muss. Vielmehr werden lediglich die unterschiedlichen Teilbereiche M, S₁ und S₂ der ersten Gesamtlichtverteilung 30 verwendet, um die zweite Gesamtlichtverteilung 31 zu erzeugen. Da ein Markierungslicht in der Regel im Stadtverkehr verwendet wird, in dem sich gehäuft Fußgänger oder Radfahrer befinden, in dem jedoch die Verwendung eines Fernlichts nicht gestattet ist, wird nicht davon ausgegangen, dass das maskierte Dauerfernlicht tatsächlich als Ausgangslichtverteilung verwendet wird. Anders verhält es sich jedoch auf Landstraßen, auf denen die Verwendung eines herkömmlichen Fernlichts dann erlaubt ist, wenn kein Fahrzeug entgegenkommt oder vorausfährt. Hier kann das maskierte Dauerfernlicht als Ausgangslichtverteilung 29 verwendet werden.

Im Folgenden wird als Ausgangssituation eine Fahrt im Stadtverkehr angenommen, bei der als Ausgangslichtverteilung 29 ein asymmetrisches Abblendlicht, wie mit Bezug zu den Figuren 3 und 4 beschrieben, verwendet wird.

Bei der Ausgangslichtverteilung 29 befinden sich die Aktuatoren 21 und 24, welche mit der Blendenwalze 8.1 bzw. 8.2 der Scheinwerfer 1, 2 gekoppelt sind, in einer Ausgangsstellung, bei der die Blendenkanten 9 ein asymmetrisches Abblendlicht erzeugen. Um eine bessere Ausleuchtung der Seitenbereiche der Fahrbahnen zu erreichen, sind zudem die Scheinwerfer 1 und 2 leicht auseinandergeschwenkt, so dass die Scheinwerfer 1 und 2 nicht parallel zueinander ausgerichtet sind.

Es wird von der Kamera 18 ein dynamisches Objekt 37, im vorliegenden Fall ein Fußgänger, auf dem linken Gehsteig erfasst. Es wird die Position des Fußgängers 37 ermittelt.

Es werden dann zunächst die Scheinwerfer 1 und 2 um eine vertikale Achse 28 verschwenkt, bis sie parallel zueinander ausgerichtet sind. Es werden also die horizontalen Schwenkwinkel der Scheinwerfer 1 und 2 gleich eingestellt. Dadurch entsteht ein überlagerter Bereich 36 in der Abblendlichtverteilung. Zudem wird der überlagerte Bereich 36 auf die Position des Fußgängers 37 geschwenkt. Dann werden die Blendenwalzen 8.1 und 8.2 mittels der Aktuatoren 21 und 24 derart durch die verschiedenen Stellungen der Blendenwalzen 8.1 und 8.2 gedreht, bis sich die Blendenkante 9 im Fokus befindet, mittels der die gewünschte L-förmige Hell-Dunkel-Grenze erzeugt wird. Die innere vertikale Hell-Dunkel-Grenze 35a des linken Lichtstrahls 30a befindet sich dann rechts von der inneren vertikalen Hell-Dunkel-Grenze 35c des rechten Lichtstrahls 30b, so dass sich der überlagerte Bereich 36 zwischen der inneren vertikalen Hell-Dunkel-Grenze 35a des linken Lichtstrahls 30a und der inneren vertikalen Hell-Dunkel-Grenze 35c des rechten Lichtstrahls 35b befindet.

Das Erzeugen der L-Formen führt gleichzeitig zu einem Aufblenden der Lichtverteilung. Da sich der überlagerte Bereich 36 mit dem Lichtintensitätsmaximum jedoch bereits an der Position des Objekts 37 befindet, wenn aufgeblendet wird, wird vermieden, dass andere Verkehrsteilnehmer, beispielsweise während des Schwenkens des überlagerten Bereichs 36 geblendet werden.

Noch effektiver kann eine Blendung des Objekts 37 vermieden werden, wenn die Leuchtweite der zweiten Gesamtlichtverteilung 31 derart angepasst wird, dass sie bis kurz vor das Objekt 37 reicht, so dass das Objekt 37 nicht direkt angeleuchtet wird. Es wird daher die Leuchtweite durch einen Niveau-Ausgleich leicht abgesenkt. Dazu werden die Scheinwerfer 1 und 2 um die horizontale Achse 27 geschwenkt. Beispielsweise werden die Scheinwerfer 1 und 2 automatisch um 3° abgesenkt, während die L-Formen erzeugt werden.

Die Dauer, bis die zweite Gesamtlichtverteilung 31 aufgebaut ist, ist dabei abhängig davon, wie weit die Scheinwerfer 1 und 2 um die vertikale Achse 28 verschwenkt werden müssen. Beispielsweise beträgt die Verzögerungszeit 50 ms pro Grad, den die Scheinwerfer um die vertikale Achse verschwenkt werden. Bei einer Verschwenkung der Scheinwerfer um 5° dauert es beispielsweise 250 ms bis die zweite Gesamtlichtverteilung 31 vollständig erzeugt worden ist. Dies wiederum bedeutet, dass die Dauer abhängig von der Position des erfassten Objekts 37 ist. Da es jedoch möglich ist, ein Objekt frühzeitig zu erfassen, führt die Verzögerung nicht zu einer Beeinträchtigung der Warnwirkung des Markierungslichts.

In einem zweiten Ausführungsbeispiel des erfindungsgemäßen Verfahrens wird wiederum die Ausgangslichtverteilung 29 erzeugt.

Wird dann ein Fußgänger 37 erfasst, werden zuerst die L-förmigen Hell-Dunkel-Grenzen der Lichtstrahlen 30a und 30b erzeugt. Dazu werden die Blendenwalzen 8.1 und 8.2 direkt in die Stellung gedreht, in welcher die Blendenkante 9 im Fokus angeordnet wird, welche die gewünschte L-Form erzeugt. Die Warnwirkung des Markierungslichts tritt in diesem Fall verzögerungsfrei sofort bei Erfassen des Fußgängers 37 ein. Das Aufblenden wirkt zunächst wie eine Lichthupe. Die Position des Fußgängers 37 muss dann noch nicht ermittelt worden sein.

Direkt nach dem Aufblenden werden die Scheinwerfer 1 und 2 um die vertikale Achse 28 geschwenkt, so dass sie parallel zueinander ausgerichtet sind. Dadurch wird der überlagerte Bereich 36 gebildet.

Es wird dann die Position des Fußgängers 37 ermittelt und der überlagerte Bereich 36 auf die Position des erfassten Fußgängers 37 geschwenkt.

Um die Blendwirkung in diesem Fall gering zu halten, können die L-Formen mit einer geringerer Lichtintensität als der eines Fernlichts, beispielsweise mit lediglich 50% der Lichtintensität einer maskierten Dauerfernlichtverteilung, erzeugt werden. Zudem kann, wie bereits im ersten Ausführungsbeispiel beschrieben, das Niveau der Scheinwerfer 1, 2 abgesenkt werden.

Alternativ können die Scheinwerfer 1, 2 auch während der Erzeugung der L-Formen bereits auf die Position des Fußgängers 37 geschwenkt werden. Die Position des Fußgängers 37 wird in diesem Fall gleichzeitig zur Erfassung des Fußgängers 37 ermittelt.

Insbesondere werden die Blendenwalzen 8.1 und 8.2 zur Erzeugung der L-Form im ersten Ausführungsbeispiel in eine entgegengesetzte Richtung gedreht wie im zweiten Ausführungsbeispiel. Die Drehrichtung der Blendenwalzen 8.1 und 8.2 bestimmt dabei neben der vertikalen Verschwenkung der Scheinwerfer 1, 2 die Geschwindigkeit, mit welcher die zweite Gesamtlichtverteilung 31 erzeugt wird.

Beispielsweise befinden sich die ersten Blendenkanten 9 zur Erzeugung der Ausgangslichtverteilung 29 und die zweiten Blendenkanten 9 zur Erzeugung der zweiten Gesamtlichtverteilung 31 direkt nebeneinander auf den Blendenwalzen 8.1 und 8.2. Es ergeben sich dann zwei Arten um von der Blendenkante 9 zur Erzeugung der Ausgangslichtverteilung 29 zu der Blendenkante 9 zur Erzeugung der zweiten Gesamtlichtverteilung 31 zu gelangen. Wird ausgehend von der ersten Blendenkante 9 in eine Richtung weg von der zweiten Blendenkante 9 gedreht, müssen zunächst alle anderen auf den Blendenwalzen 8.1 und 8.2 angeordneten Blendenkanten 9 durch den Fokus gedreht werden, bis die zweite Blendenkante 9 erreicht wird. Auf diese Weise wird beispielsweise im ersten Ausführungsbeispiel des Verfahrens verfahren.

Wird von der ersten Blendenkante 9 in Richtung der zweiten Blendenkante 9 gedreht, befindet sich sofort die zweite Blendenkante 9 im Fokus. Auf diese Weise wird beispielsweise im ersten Ausführungsbeispiel des Verfahrens verfahren.

In einem dritten Ausführungsbeispiel des erfindungsgemäßen Verfahrens werden alternativ zu dem Verschwenken der Scheinwerfer 1 und 2 die Blendenwalzen 8.1 und 8.2 in den Strahlengängen verschoben. Dabei wird die rechte Blendenwalze 8.1 horizontal nach links im Strahlengang des rechten Scheinwerfers 1 und die linke Blendenwalze 8.2 horizontal nach rechts im Strahlengang des linken Scheinwerfers 2 verschoben. Dadurch wird auf der Fahrbahn der rechte Seitenbereich S₁ nach links und der linke Seitenbereich S₂ nach rechts verschoben, bis sie zumindest teilweise überlagert sind. Der Markierungsspot 36 wird dann nicht durch Verschwenken der Scheinwerfer 1 und 2, sondern durch Verschieben der Blendenwalzen 8.1 und 8.2 erzeugt.

In Abhängigkeit von der Position des Fußgängers 37 kann auch lediglich eine der beiden Blendenwalzen 8.1 oder 8.2 verschoben werden, bis sich der überlagerte Bereich 36 in der zweiten Gesamtlichtverteilung 31 bei der Position des Fußgängers 37 bildet.

Bei allen Ausführungsbeispielen des erfindungsgemäßen Verfahrens kann zudem die Bewegungstrajektorie des Fußgängers 37 vorhergesagt werden und der überlagerte Bereich 36 dem Fußgänger 37 nachgeführt werden. Um hierbei eine maximale Nachführung des Markierungsspots 36 zu gewährleisten, kann der Markierungsspot 36 durch eine Kombination von Verschwenken der Scheinwerfer 1 und 2 und Verschieben der Blendenwalzen 8.1 und 8.2 realisiert werden.

Ferner kann die zweite Gesamtlichtverteilung 31 insbesondere dann erzeugt werden, wenn sich der Fußgänger 37 innerhalb einer definierten Gefahrenzone in Fahrtrichtung vor dem Fahrzeug 10 befindet.

Verlässt der Fußgänger 37 die Gefahrenzone wieder, so kann der überlagerte Bereich durch den umgekehrten Ablauf des Verfahrens wieder abgebaut und wieder die Ausgangslichtverteilung 29 erzeugt werden.

Alternativ zu einer parallelen Ausrichtung der Scheinwerfer 1 und 2 zueinander, können die Scheinwerfer auch zueinander geschwenkt werden. Dadurch lässt sich die Breite des überlagerten Bereichs 36 beispielsweise auf die Breite und/oder die Größe des erfassten Objekts 37 einstellen. Dazu wird beispielsweise die Breite und/oder die Größe des Objekts 37 erfasst werden. Es werden dann für jeden Scheinwerfer 1 und 2 einzeln horizontale Schwenkwinkel ermittelt. Es wird also für den linken Scheinwerfer 2 ein linker Schwenkwinkel und für den rechten Scheinwerfer 1 ein rechter Schwenkwinkel in Abhängigkeit von der Breite und/oder Größe des Objekts 37 ermittelt. Bewegt sich Objekt, werden die entsprechend benötigten Schwenkwinkel ständig ermittelt, so dass der überlagerte Bereich 36 dem Fußgänger 37 in der auf die Breite und/oder Größe des erfassten Fußgängers 37 nachgeführt werden kann.

Dem Markierungslicht kann insbesondere auch lediglich die Aufgabe einer Blicklenkung zukommen. Dazu kann das Markierungslicht nur kurz erzeugt werden, um die Aufmerksamkeit des Fahrers auf das erfasste Objekt 37 zu lenken. Beispielsweise kann das Markierungslicht für einen Zeitraum in einem Bereich von 50 ms bis 300 ms erzeugt werden. Insbesondere wird das Markierungslicht für 150 ms erzeugt. Das Markierungslicht hat dann den Effekt einer Lichthupe.

Bei einem angehobenen Abblendlicht zur Markierung von Fußgängern, Tieren oder anderen Objekten kommt es häufig zu einer harten Kante in der Lichtverteilung auf der Fahrbahn. Insbesondere kommt es zu einer starken Seitenbereichsaufhellung, wodurch die Wahrscheinlichkeit der Blendung anderer Verkehrsteilnehmer sehr hoch ist.

Im Unterschied dazu wird vom erfindungsgemäßen Verfahren ein Markierungslicht erzeugt, welches tatsächlich nur das erfasste Objekt beleuchtet. Durch die zu den Seiten hin stark abfallende Lichtintensität werden die Seitenbereiche der Fahrbahn wenig aufgehellt. Zudem wird die Lichtverteilung derart abgesenkt, dass der Fußgänger nicht direkt angeleuchtet wird. Es entstehen keine harten Lichtkanten auf dem Fußgänger. Dadurch wird der Wahrnehmungsreiz des Fahrers nicht maskiert und der Fußgänger selbst nicht geblendet. Insgesamt stellt das erfindungsgemäße Markierungslicht eine weiche Ausleuchtung des Fußgängers und des Seitenbereichs der Fahrbahn bereit, wodurch die Gefahr der Blendung anderer Verkehrsteilnehmer 11, 12 auf ein Minimum reduziert werden kann.

In einer weiteren Ausführungsform des erfindungsgemäßen Verfahrens wird, bevor die zweite Gesamtlichtverteilung 31 erzeugt wird, ermittelt, ob durch die zweite Gesamtlichtverteilung 31 andere Verkehrsteilnehmer, insbesondere die Fahrer vorausfahrender 12 und entgegenkommender Fahrzeuge 11, geblendet werden. Die zweite Gesamtlichtverteilung 31 wird nur dann erzeugt, wenn ermittelt wurde, dass keine anderen Verkehrsteilnehmer 11, 12 geblendet werden. Dadurch wird weiterhin die Gefahr der Blendung anderer Verkehrsteilnehmer 11, 12 auf ein Minimum reduziert werden. Zudem wird ein Fußgänger 37 oder ein anderes Objekt auch von den anderen Verkehrsteilnehmern beleuchtet, so dass die zweite Gesamtlichtverteilung 31 nicht erzeugt werden muss.

### Bezugszeichenliste

- 1: rechter Scheinwerfer
- 2: linker Scheinwerfer
- 3: Lichtquelle
- 4: Gehäuse
- 5: Lichtscheibe
- 6: Reflektor
- 7: Projektionslinse
- 8.1: rechte Blendenwalze
- 8.2: linke Blendenwalze
- 9: Blendenkante
- 10: Fahrzeug mit der Scheinwerferanordnung
- 11: entgegenkommendes Fahrzeug
- 12: vorausfahrendes Fahrzeug
- 13: Steuergerät für den rechten Scheinwerfer
- 14: Steuergerät für den linken Scheinwerfer
- 15: Bildverarbeitungsvorrichtung
- 16: Steuervorrichtung
- 18: Erfassungseinrichtung; Kamera
- 19: erster Aktuator für den rechten Scheinwerfer
- 20: zweiter Aktuator für den rechten Scheinwerfer
- 21: dritter Aktuator für den rechten Scheinwerfer
- 22: erster Aktuator für den linken Scheinwerfer
- 23: zweiter Aktuator für den linken Scheinwerfer
- 24: dritter Aktuator für den linken Scheinwerfer
- 25: Horizontalachse
- 26: Mittelachse
- 27: horizontale Achse
- 28: vertikale Achse
- 29: Ausgangslichtverteilung/ Abblendlicht
- 30: erste Gesamtlichtverteilung/ maskiertes Dauerfernlicht
- 31: zweite Gesamtlichtverteilung/ Markierungslicht
- 32: 15°-Anstieg der ersten Gesamtlichtverteilung
- 33: Fahrbahn
- 34: Gegenfahrbahn
- 35a: innere vertikale Hell-Dunkel-Grenze linker Lichtstrahl
- 35b: horizontale Hell-Dunkel-Grenze linker Lichtstrahl
- 35c: innere vertikale Hell-Dunkel-Grenze rechter Lichtstrahl
- 35d: horizontale Hell-Dunkel-Grenze rechter Lichtstrahl
- 35e: äußere vertikale Hell-Dunkel-Grenze des linken Lichtstrahls
- 35f: äußere vertikale Hell-Dunkel-Grenze des rechten Lichtstrahls
- 36: Bereich der überlagerten Seitenbereich S₁ und S₂; Markierungsspot
- 37: erfasstes Objekt; Fußgänger
- 38: lichtfreier Korridor
- L: Lichtemissionsrichtung
- V: Vertikale
- A, B: Schwenkrichtung
- S₁, S₂: Seitenbereich der ersten Gesamtlichtverteilung
- M: Mittelbereich der ersten Gesamtlichtverteilung

## Patentansprüche

1. Verfahren zum Steuern einer Scheinwerferanordnung für ein Fahrzeug (10), wobei die Scheinwerferanordnung einen rechten Scheinwerfer (1) und einen linken Scheinwerfer (2) aufweist, wobei der rechte Scheinwerfer (1) einen rechten Lichtstrahl (30b) und der linke Scheinwerfer (2) einen linken Lichtstrahl (30a) emittiert, mittels denen eine erste Gesamtlichtverteilung (30) erzeugbar ist, bei der ein Mittelbereich (M) gebildet wird und beidseitig neben diesem Mittelbereich (M) Seitenbereiche (S₁, S₂) gebildet werden, wobei die Seitenbereiche (S₁, S₂) eine größere Leuchtweite aufweisen als der Mittelbereich (M), bei dem
mittels des linken (30a) und des rechten Lichtstrahls (30b) eine Ausgangslichtverteilung (29) erzeugt wird,
zumindest ein Objekt (37) in Fahrtrichtung vor dem Fahrzeug (10) erfasst wird, wobei die Position des Objekts (37) ermittelt wird und die Größe und/oder Breite des Objekts (37) erfasst wird,
wenn die Position des Objekts (37) ermittelt worden ist, eine zweite Gesamtlichtverteilung (31), die ein Markierungslicht ist, erzeugt wird, **dadurch gekennzeichnet, dass** bei der zweiten Gesamtlichtverteilung (31) die Seitenbereiche (S₁, S₂) der ersten Gesamtlichtverteilung (30) zumindest teilweise bei der Position des Objekts (37) überlagert werden, so dass ein überlagerter Bereich (36) gebildet wird, in dem sich die Lichtintensität aus der Lichtintensität des linken (30a) und des rechten Lichtstrahls (30b) zusammensetzt,
wobei der überlagerte Bereich (36) durch Schwenken der Lichtemissionsrichtungen (L) der Scheinwerfer (1, 2) um eine vertikale Achse (28) auf die ermittelte Position erzeugt wird,
ein linker Schwenkwinkel für den linken Scheinwerfer (2) um die vertikale Achse (28) und ein rechter Schwenkwinkel für den rechten Scheinwerfer (1) um die vertikale Achse (28) in Abhängigkeit von der Größe und/oder Breite des Objekts (37) ermittelt werden und
der linke Scheinwerfer (2) um den ermittelten linken Schwenkwinkel und der rechte Scheinwerfer (1) um den ermittelten rechten Schwenkwinkel verschwenkt wird, so dass die Breite und/oder Größe des überlagerten Bereichs (36) abhängig von der Breite und/oder Größe des Objekts (37) ist.

2. Verfahren nach Anspruch 1,
**dadurch gekennzeichnet, dass**
der linke (30a) und der rechte Lichtstrahl (30b) zum Erzeugen der ersten (30) und der zweiten Gesamtlichtverteilung (31) eine im Wesentlichen vertikale Hell-Dunkel-Grenze (35a, 35c) und eine im Wesentlichen horizontale Hell-Dunkel-Grenze (35b, 35d) umfassen, so dass die Hell-Dunkel-Grenzen der Lichtstrahlen (30a, 30b) jeweils eine L-Form aufweisen, wobei der linke (30a) und der rechte Lichtstrahl (30b) derart überlagert werden, dass die vertikale Hell-Dunkel-Grenze (35a) des linken Lichtstrahls (30a) rechts von der vertikalen Hell-Dunkel-Grenze (35c) des rechten Lichtstrahls (30b) liegt.

3. Verfahren nach Anspruch 2,
**dadurch gekennzeichnet, dass**
die Lichtemissionsrichtungen (L) der Scheinwerfer (1, 2) zunächst derart verschwenkt werden, dass der überlagerte Bereich (36) auf die Position des Objekts (37) gerichtet wird, und dann die L-förmigen Hell-Dunkel-Grenzen der Lichtstrahlen (30a, 30b) erzeugt werden.

4. Verfahren nach Anspruch 2,
**dadurch gekennzeichnet, dass**
zunächst die L-förmigen Hell-Dunkel-Grenzen der Lichtstrahlen (30a, 30b) erzeugt werden und dann die Lichtemissionsrichtungen (L) der Scheinwerfer (1, 2) derart verschwenkt werden, dass der überlagerte Bereich (36) auf die Position des Objekts (37) gerichtet wird.

5. Verfahren nach einem der Ansprüche 2 bis 4,
**dadurch gekennzeichnet, dass**
die L-Form der Hell-Dunkel-Grenzen des linken Lichtstrahls (30a) von einem im Strahlengang des linken Scheinwerfers (2) angeordneten linken mechanischen Element (8.2) und die L-Form des rechten Lichtstrahls (30b) von einem im Strahlengang des rechten Scheinwerfers (1) angeordneten rechten mechanischen Elements (8.1) erzeugt werden, wobei zum Erzeugen des überlagerten Bereichs das linke (8.2) und/oder das rechte mechanische Element (8.1) in Abhängigkeit von der Position des Objekts (37) zumindest horizontal im Strahlengang verschoben werden.

6. Verfahren nach Anspruch 5,
**dadurch gekennzeichnet, dass**
zum Erzeugen des überlagerten Bereichs (36) das linke mechanische Element (8.2) nach rechts im Strahlengang des linken Scheinwerfers (2) und/oder das rechte mechanische Element (8.1) nach links im Strahlengang des rechten Scheinwerfers (1) verschoben wird.

7. Verfahren nach einem der vorhergehenden Ansprüche,
**dadurch gekennzeichnet, dass**
die Leuchtweite der zweiten Gesamtlichtverteilung (31) nach oder während der Bildung des überlagerten Bereichs (36) abgesenkt wird.

8. Verfahren einem der vorhergehenden Ansprüche,
**dadurch gekennzeichnet, dass**
die erste Gesamtlichtverteilung (30) ein maskiertes Dauerfernlicht und/oder die Ausgangslichtverteilung (29) eine Abblendlichtverteilung, eine asymmetrische Abblendlichtverteilung oder eine Stadtlichtverteilung ist.

9. Verfahren nach einem der vorhergehenden Ansprüche,
**dadurch gekennzeichnet, dass**
ermittelt wird, ob das Erzeugen der zweiten Gesamtlichtverteilung andere Verkehrsteilnehmer blenden würde, und
die zweite Gesamtlichtverteilung nicht erzeugt wird, wenn ermittelt wurde, dass andere Verkehrsteilnehmer geblendet werden würden.

10. Scheinwerferanordnung für ein Fahrzeug (10) mit
einem rechten (1) und einem linken Scheinwerfer (2), die derart ausgebildet sind, dass mit dem rechten Scheinwerfer (1) ein rechter Lichtstrahl (30b) und mit dem linken Scheinwerfer (2) ein linker Lichtstrahl (30b) emittiert wird, mittels denen eine erste Gesamtlichtverteilung (30) erzeugt wird, bei der ein Mittelbereich (M) und beidseitig neben diesem Mittelbereich (M) Seitenbereiche (S₁, S₂) gebildet werden, wobei die Seitenbereiche (S₁, S₂) eine größere Leuchtweite aufweisen als der Mittelbereich (M), wobei mittels des linken (30a) und des rechten Lichtstrahls (30b) eine Ausgangslichtverteilung (29) erzeugt wird,
einer Erfassungseinrichtung (18), die derart ausgebildet ist, dass zumindest ein Objekt (37) in Fahrtrichtung vor dem Fahrzeug (10) erfassbar und die Position des Objekts (37) ermittelt wird und die Größe und/oder Breite des Objekts (37) erfasst wird, und
**gekennzeichnet durch** eine Steuervorrichtung (16), die derart ausgebildet ist, dass die Scheinwerfer (1, 2), wenn die Position des Objekts (37) ermittelt worden ist, zum Erzeugen einer zweiten Gesamtlichtverteilung (31), die ein Markierungslicht ist, derart angesteuert werden, dass die Seitenbereiche (S₁, S₂) der ersten Gesamtlichtverteilung (30) zumindest teilweise bei der Position des Objekts (37) überlagerbar sind, so dass ein überlagerter Bereich (36) gebildet wird, in dem sich die Lichtintensität aus der Lichtintensität des linken (30a) und des rechten Lichtstrahls (30b) zusammensetzt, wobei der überlagerte Bereich (36) durch Schwenken der Lichtemissionsrichtungen (L) der Scheinwerfer (1, 2) um eine vertikale Achse (28) auf die ermittelte Position erzeugt wird, ein linker Schwenkwinkel für den linken Scheinwerfer (2) um die vertikale Achse (28) und ein rechter Schwenkwinkel für den rechten Scheinwerfer (1) um die vertikale Achse (28) in Abhängigkeit von der Größe und/oder Breite des Objekts (37) ermittelt werden und der linke Scheinwerfer (2) um den ermittelten linken Schwenkwinkel und der rechte Scheinwerfer (1) um den ermittelten rechten Schwenkwinkel verschwenkt wird, so dass die Breite und/oder Größe des überlagerten Bereichs (36) abhängig von der Breite und/oder Größe des Objekts (37) ist.

## Claims

1. Method for controlling a headlight arrangement for a vehicle (10), the headlight arrangement having a right headlight (1) and a left headlight (2), the right headlight (1) emitting a right light beam (30b) and the left headlight (2) emitting a left light beam (30a), by means of which light beams a first total light distribution (30) can be generated, in which a central region (M) is formed and side regions (S₁, S₂) are formed on either side of this central region (M), the side regions (S₁, S₂) having a greater illuminating range than the central region (M), in which method an initial light distribution (29) is generated by means of the left light beam (30a) and the right light beam (30b),
at least one object (37) is detected in front of the vehicle (10) in the direction of travel, the position of the object (37) being determined and the size and/or width of the object (37) being detected,
and a second total light distribution (31), which is a marker light, is generated when the position of the object (37) has been determined, **characterized in that** in the second total light distribution (31), the side regions (S₁, S₂) of the first total light distribution (30) are at least partially superimposed at the position of the object (37) so that a superimposed region (36) is formed in which the light intensity is made up of the light intensity of the left light beam (30a) and of the right light beam (30b),
the superimposed region (36) being generated by tilting the light emission directions (L) of the headlights (1, 2) about a vertical axis (28) to the determined position,
a left tilt angle for the left headlight (2) about the vertical axis (28) and a right tilt angle for the right headlight (1) about the vertical axis (28) being determined depending on the size and/or width of the object (37), and the left headlight (2) being tilted by the determined left tilt angle and the right headlight (1) being tilted by the determined right tilt angle, so that the width and/or size of the superimposed region (36) is dependent on the width and/or size of the object (37).

2. Method according to claim 1,
**characterized in that**
the left light beam (30a) and the right light beam (30b), for generating the first total light distribution (30) and the second total light distribution (31), comprise a substantially vertical light-dark boundary (35a, 35c) and a substantially horizontal light-dark boundary (35b, 35d), so that the light-dark boundaries of the light beams (30a, 30b) each have an L-shape, the left light beam (30a) and the right light beam (30b) being superimposed such that the vertical light-dark boundary (35a) of the left light beam (30a) lies to the right of the vertical light-dark boundary (35c) of the right light beam (30b).

3. Method according to claim 2,
**characterized in that**
the light emission directions (L) of the headlights (1, 2) are first tilted such that the superimposed region (36) is pointed at the position of the object (37), and then the L-shaped light-dark boundaries of the light beams (30a, 30b) are generated.

4. Method according to claim 2,
**characterized in that**
first the L-shaped light-dark boundaries of the light beams (30a, 30b) are generated and then the light emission directions (L) of the headlights (1, 2) are tilted such that the superimposed region (36) is pointed at the position of the object (37).

5. Method according to any of claims 2 to 4,
**characterized in that**
the L-shape of the light-dark boundaries of the left light beam (30a) is generated by a left mechanical element (8.2) arranged in the beam path of the left headlight (2), and the L-shape of the right light beam (30b) is generated by a right mechanical element (8.1) arranged in the beam path of the right headlight (1), the left mechanical element (8.2) and/or the right mechanical element (8.1) being moved at least horizontally in the beam path, depending on the position of the object (37), for generating the superimposed region.

6. Method according to claim 5,
**characterized in that**
for generating the superimposed region (36), the left mechanical element (8.2) is moved to the right in the beam path of the left headlight (2) and/or the right mechanical element (8.1) is moved to the left in the beam path of the right headlight (1).

7. Method according to any of the preceding claims,
**characterized in that**
the illuminating range of the second total light distribution (31) is reduced after or whilst forming the superimposed region (36).

8. Method according to any of the preceding claims,
**characterized in that**
the first total light distribution (30) is a masked continuous high beam and/or the initial light distribution (29) is a low beam light distribution, an asymmetrical low beam light distribution or an urban light distribution.

9. Method according to any of the preceding claims,
**characterized in that**
it is determined whether generating the second total light distribution would dazzle other road users, and
the second total light distribution is not generated if it has been determined that other road users would be dazzled.

10. Headlight arrangement for a vehicle (10), comprising
a right headlight (1) and a left headlight (2), which are designed such that a right light beam (30b) is emitted by the right headlight (1) and a left light beam (30b) is emitted by the left headlight (2), by means of which light beams a first total light distribution (30) is generated, in which a central region (M) and side regions (S₁, S₂) on either side of this central region (M) are formed, the side regions (S₁, S₂) having a greater illuminating range than the central region (M), an initial light distribution (29) being generated by means of the left light beam (30a) and the right light beam (30b),
a detection apparatus (18) which is designed such that at least one object (37) in front of the vehicle (10) in the direction of travel can be detected and the position of the object (37)
is determined and the size and/or width of the object (37) is detected, and **characterized by**
a control device (16) which is designed such that the headlights (1, 2), when the position of the object (37) has been determined, are controlled to generate a second total light distribution (31), which is a marker light, such that the side regions (S₁, S₂) of the first total light distribution (30) can be at least partially superimposed at the position of the object (37), so that a superimposed region (36) is formed in which the light intensity is made up of the light intensity of the left light beam (30a) and of the right light beam (30b), the superimposed region (36) being generated by tilting the light emission directions (L) of the headlights (1, 2) about a vertical axis (28)
to the determined position, a left tilt angle for the left headlight (2) about the vertical axis (28) and a right tilt angle for the right headlight (1) about the vertical axis (28) being determined depending on the size and/or width of the object (37), and the left headlight (2) being tilted by the determined left tilt angle and the right headlight (1) being tilted by the determined right tilt angle, so that the width and/or size of the superimposed region (36) is dependent on the width and/or size of the object (37).

## Revendications

1. Procédé de commande d'un ensemble de phares pour un véhicule (10), dans lequel l'ensemble de phares présente un phare droit (1) et un phare gauche (2), dans lequel le phare droit (1) émet un faisceau lumineux droit (30b) et le phare gauche (2) un faisceau lumineux gauche (30a), au moyen desquels une première répartition globale de la lumière (30) peut être générée, dans laquelle une zone centrale (M) est formée et des zones latérales (S₁, S₂) sont formées de part et d'autre de ladite zone centrale (M), dans lequel les zones latérales (S₁, S₂) présentent une portée lumineuse supérieure à celle de la zone centrale (M), dans laquelle une répartition de la lumière de sortie (29) est générée au moyen du faisceau lumineux gauche (30a) et du faisceau lumineux droit (30b),
au moins un objet (37) est détecté dans le sens de la marche devant le véhicule (10), dans lequel la position de l'objet (37) est déterminée et la taille et/ou la largeur de l'objet (37) sont détectées,
lorsque la position de l'objet (37) a été déterminée, une seconde répartition globale de la lumière (31), qui est une lumière de marquage, est générée, **caractérisé en ce que,** dans la seconde répartition globale de la lumière (31), les zones latérales (S₁, S₂) de la première répartition globale de la lumière (30) sont superposées au moins partiellement lors de la position de l'objet (37), de sorte qu'une zone superposée (36) est formée, dans laquelle l'intensité lumineuse se compose de l'intensité lumineuse du faisceau lumineux gauche (30a) et du faisceau lumineux droit (30b),
dans lequel la zone superposée (36) est générée en faisant pivoter les directions d'émission de lumière (L) des phares (1, 2) autour d'un axe vertical (28) vers la position déterminée,
un angle de pivotement gauche pour le phare gauche (2) autour de l'axe vertical (28) et un angle de pivotement droit pour le phare droit (1) autour de l'axe vertical (28) sont déterminés en fonction de la taille et/ou de la largeur de l'objet (37) et le phare gauche (2) est pivoté de l'angle de pivotement gauche déterminé et le phare droit (1) est pivoté de l'angle de pivotement droit déterminé, de sorte que la largeur et/ou la taille de la zone superposée (36) dépend de la largeur et/ou de la taille de l'objet (37).

2. Procédé selon la revendication 1,
**caractérisé en ce que**
le faisceau lumineux gauche (30a) et le faisceau lumineux droit (30b) pour générer la première (30) et la seconde (31) répartition globale de la lumière comprennent une limite de clair-obscur sensiblement verticale (35a, 35c) et une limite de clair-obscur sensiblement horizontale (35b, 35d), de sorte que les limites de clair-obscur des faisceaux lumineux (30a, 30b) présentent respectivement une forme de L, dans lequel le faisceau lumineux gauche (30a) et le faisceau lumineux droit (30b) sont superposés de telle sorte que la limite de clair-obscur verticale (35a) du faisceau lumineux gauche (30a) se trouve à droite de la limite de clair-obscur verticale (35c) du faisceau lumineux droit (30b).

3. Procédé selon la revendication 2,
**caractérisé en ce que**
les directions d'émission de lumière (L) des phares (1, 2) sont d'abord pivotées de telle sorte que la zone superposée (36) est dirigée vers la position de l'objet (37), puis les limites de clair-obscur en forme de L des faisceaux lumineux (30a, 30b) sont générées.

4. Procédé selon la revendication 2,
**caractérisé en ce que**
les limites clair-obscur en forme de L des faisceaux lumineux (30a, 30b) sont d'abord générées, puis les directions d'émission de lumière (L) des phares (1, 2) sont pivotées de telle sorte que la zone superposée (36) est dirigée vers la position de l'objet (37).

5. Procédé selon l'une des revendications 2 à 4,
**caractérisé en ce que**
la forme en L des limites de clair-obscur du faisceau lumineux gauche (30a) est générée par un élément mécanique gauche (8.2) agencé dans le trajet de faisceau du phare gauche (2) et la forme en L du faisceau lumineux droit (30b) est générée par un élément mécanique droit (8.1) agencé dans le trajet de faisceau du phare droit (1), dans lequel pour la génération de la zone superposée, l'élément mécanique gauche (8.2) et/ou l'élément mécanique droit (8.1) sont déplacés au moins horizontalement dans le trajet de faisceau en fonction de la position de l'objet (37).

6. Procédé selon la revendication 5,
**caractérisé en ce que**
pour la génération de la zone superposée (36), l'élément mécanique gauche (8.2) est déplacé vers la droite dans le trajet de faisceau du phare gauche (2) et/ou l'élément mécanique droit (8.1) est déplacé vers la gauche dans le trajet de faisceau du phare droit (1).

7. Procédé selon l'une des revendications précédentes,
**caractérisé en ce que**
la portée lumineuse de la seconde répartition globale de la lumière (31) est abaissée après ou pendant la formation de la zone superposée (36).

8. Procédé selon l'une quelconque des revendications précédentes,
**caractérisé en ce que**
la première répartition globale de la lumière (30) est une lumière permanente masquée et/ou la répartition de la lumière de sortie (29) est une répartition de la lumière de croisement, une répartition de la lumière de croisement asymétrique ou une répartition de la lumière urbaine.

9. Procédé selon l'une des revendications précédentes,
**caractérisé en ce que**
on détermine si la génération de la seconde répartition globale de la lumière éblouirait les autres usagers de la route, et
la seconde répartition globale de la lumière globale n'est pas générée s'il a été déterminé que les autres usagers de la route seraient éblouis.

10. Ensemble de phares pour un véhicule (10) comportant
un phare droit (1) et un phare gauche (2), qui sont conçus de telle sorte qu'un faisceau lumineux droit (30b) est émis avec le phare droit (1) et un faisceau lumineux gauche (30b) est émis avec le phare gauche (2), au moyen desquels une première répartition globale de la lumière (30) est générée, dans laquelle une zone centrale (M) et des zones latérales (S₁, S₂) de part et d'autre de cette zone centrale (M) sont formées, dans lequel les zones latérales (S₁, S₂) présentent une portée lumineuse supérieure à celle de la zone centrale (M), dans lequel une répartition de la lumière de sortie (29) est générée au moyen du faisceau lumineux gauche (30a) et du faisceau lumineux droit (30b),
un moyen de détection (18) qui est conçu de telle sorte qu'au moins un objet (37) peut être détecté devant le véhicule (10) dans le sens de la marche et la position de l'objet (37) est déterminée et la taille et/ou la largeur de l'objet (37) sont détectées, et
**caractérisé par** un dispositif de commande (16) qui est conçu de telle sorte que les phares (1, 2), lorsque la position de l'objet (37) a été déterminée, sont commandés pour générer une seconde répartition globale de la lumière (31) qui est une lumière de marquage, de telle sorte que les zones latérales (S₁, S₂) de la première répartition globale de la lumière (30) peuvent être au moins partiellement superposées à la position de l'objet (37), de sorte qu'une zone superposée (36) est formée, dans laquelle l'intensité lumineuse se compose de l'intensité lumineuse du faisceau lumineux gauche (30a) et du faisceau lumineux droit (30b), dans lequel la zone superposée (36) est générée par pivotement des directions d'émission de lumière (L) des phares (1, 2) autour d'un axe vertical (28) vers la position déterminée, un angle de pivotement gauche pour le phare gauche (2) autour de l'axe vertical (28) et un angle de pivotement droit pour le phare droit (1) autour de l'axe vertical (28) sont déterminés en fonction de la taille et/ou de la largeur de l'objet (37) et le phare gauche (2) est pivoté de l'angle de pivotement gauche déterminé et le phare droit (1) est pivoté de l'angle de pivotement droit déterminé, de sorte que la largeur et/ou la taille de la zone superposée (36) dépend de la largeur et/ou de la taille de l'objet (37).
